# EUROPEAN PATENT APPLICATION

(11) **EP 4 703 317 A1**
(43) Date of publication of application: **04.03.2026**
(21) Application number: 24796353.1
(22) Date of filing: 19.03.2024
(51) Int. Cl.: B66C 23/90, B66C 23/687, B66C 23/78, B66C 15/00, B66C 15/06, B66C 13/16, B66F 17/00, G01G 23/00, B66D 3/00

(54) **SYSTEM FOR MEASURING A LOAD IN A LIFTING TOWER**

(30) Priority: 24.04.2023 ES 202330698 U
(71) Applicant: Equipson, S.A., 46460 Silla (Valencia) (ES)
(72) Inventor: VILA ORTIZ, José, 46460 Silla Valencia (ES)
(74) Representative: Ungria López, Javier
(86) International application number: PCT/ES2024/070174
(87) International publication number: WO 2024/223962

(57) **Abstract**

The invention relates to a system comprising a vertical telescopic structure formed by at least a first section (2a) and a movable second section (2b) guided within the first section (2a). The second section of the tower (2) rests on a spring (6). A first end of the spring is supported on a fixed base (7) solidly connected to the first section of the tower, while a second end of the spring is supported on a plate (14) solidly connected to the second section of the tower. The system also includes a control element (8) solidly connected to the second section of the tower, and a graduated scale (10) located on the exterior surface of the first section of the tower. During loading, the second section moves downwards against the resistance of the spring, the control element moving in parallel from an initial position to a final position, both positions being controlled using the scale.

## Description

### Object of the invention

The present invention relates to a system for measuring a load in a lifting tower used in musical or any other type of events for the installation of lighting and/or sound elements. The object of the present invention is to improve the functionality and safety of these towers by providing them with more efficient high lifting means thanks to the incorporation of a system for measuring a load that incorporates safety means to prevent the lifting tower from being initially overloaded before the load is activated and lifted, such that when a predetermined load weight considered dangerous is exceeded, the system for measuring shows or visualises in a very intuitive manner that the lifting of the load exceeds the recommended values.

It is therefore a load verification system for lifting towers for lighting and sound elements, without of course ruling out the loading of other elements.

Thus, with this measurement and verification system of the invention, damage to the tower and, more importantly, possible accidents due to overloading of the lifting tower are avoided. Furthermore it should be noted that with the system of the invention it is not necessary to resort to complex electronic systems to know the weight of the load before lifting it, as the invention solves this in a simple way using a mechanical system.

### Background of the invention

In the present state of the art, lifting towers used in the installation of lighting and sound systems comprise several telescopic sections, which are moved vertically using the action of a pulling/lifting mechanism.

Normally, a horizontal support structure where the different lighting elements are assembled is arranged between two towers. This configuration means that these towers must be able to support heavy weights.

Nowadays, different types of structures are known for the construction or assembly of heavy equipment used for social events, such as theatre, cinema, concerts, sport events, etc.

In this sense, towers are known to support luminaires, cameras and loudspeakers in different types of events.

Some structures of this type have lifting platforms or otherwise extendable platforms, which are actuated using a crank handle connected to a winch or the like and to a lifting pulley mechanism. In some cases, the actuation is manual, and in other cases, there is a motorised actuation that does not require a manual crank handle and is equipped with a motor connected to a winch or the like and to the lifting mechanism of the moving parts or sections of the lifting tower.

The aforementioned lifting mechanism thus enables the towers to be lifted by one person using a crank handle or in a motorised manner, regardless of the load being supported by said platforms.

However, in relation to the above, each tower or platform structure is normally designed to operate below a maximum load level. If this maximum load level for which it has been designed is exceeded, faults or breakdowns may occur in said tower or platform structure, with the possibility of tension cables breaking and, ultimately, the risk of structural collapse and serious accidents.

One of the problems related to overloading these load-bearing structures is that, due to the lifting mechanism that reduces the torque required for its actuation, it is difficult for the user to perceive any difference in the torque that must be applied to the lifting mechanism to lift the platform, regardless of the variation in the load to be lifted.

Therefore, to ensure that the maximum load level preset for each structure is not exceeded, operators must weigh each piece they assemble on the structure beforehand or, alternatively, know with certainty the weight of the pieces they assemble on the platform. This is a drawback with respect to the pulling or lifting in the aforementioned bearing structures in the state of the art.

On the other hand, in order to know beforehand the weight of the load to be lifted in conventional lifting towers, there are complex mechanisms known in the state of the art, based on load cells or similar mechanisms, which offer solutions to excess weight, but normally require an electrical power supply for their operation, which greatly conditions their effectiveness, not to mention the possible breakdowns as it is a product subjected to quite demanding working conditions.

### Description of the invention

In order to achieve the objectives and avoid the drawbacks mentioned in the preceding paragraphs, the invention proposes a system for measuring a load in a lifting tower comprising a vertical telescopic structure formed by at least a first section and a movable second section guided within the first section; wherein the measuring system links the first section and the second section forming the lifting tower.

It should be noted that a movable second section is understood to mean any section or part of the lifting tower, regardless of its relative location therein, such as an upper T-shaped terminal structure.

The system for measuring a load comprises a spring working under compression, on which the second section of the tower rests; wherein a lower end of the spring is supported on a fixed base solidly connected to the first section of the tower which remains in a static position, while an upper end of said spring, opposite the lower end, is supported on a plate the second section of the tower.

The system for measuring a load further comprises at least one control element integral with the second section of the tower; wherein said control element emerges through a vertical slot that goes through a side wall of the tubular structure of the first section of the tower.

The system for measuring also comprises a graduated scale located on the exterior surface of the first section of the tower; wherein said scale is located in an area adjacent to the vertical slot and arranged parallel to said vertical slot.

With this described essential structure of the invention, during the loading of the tower with a weight, the second section of said tower moves downwards against the resistance of the spring while the first section of the tower remains static, the control element moving in parallel from an initial position to a final position, both positions being controlled using the graduated scale.

The spring is coupled in the lower portion to a vertical stability element; wherein in a first embodiment of the invention, the stability element comprises a rod housed within said spring; wherein said rod is integral with the fixed base of the first section of the tower.

In a second embodiment of the invention, the stability element comprises a bushing in which a portion of said spring is housed; wherein said bushing is fixed to the plate of the second section of the tower.

The maximum downward movement of the second section of the tower against the resistance of the spring is limited by the stability element.

The lifting tower comprises the system for measuring described above, while further including a support base with wheels which is attached to the first section, wherein said wheels are configured to move the assembly of said lifting tower.

The support base of the lifting tower comprises a frame to which the wheels are coupled, and horizontal extensions attached to said frame and to the first section of the tower; wherein the support base further includes height-adjustable extendable legs that are supported on the ground. Said extendable legs are configured to stabilise and level the assembly of the lifting tower. For this purpose, the extendable legs are coupled by means of threading to some ends of the extensions of the support base.

The measuring system allows the excess load to be visually checked before it is lifted and essentially comprises the telescopic structure formed by the initial first section and at least the movable second section configured to move, guided longitudinally along said first section.

Moreover, to help better understand this specification and as an integral part thereof, a series of figures is attached in which the object of the invention is depicted in an illustrative and non-limiting manner.

### Brief description of the figures

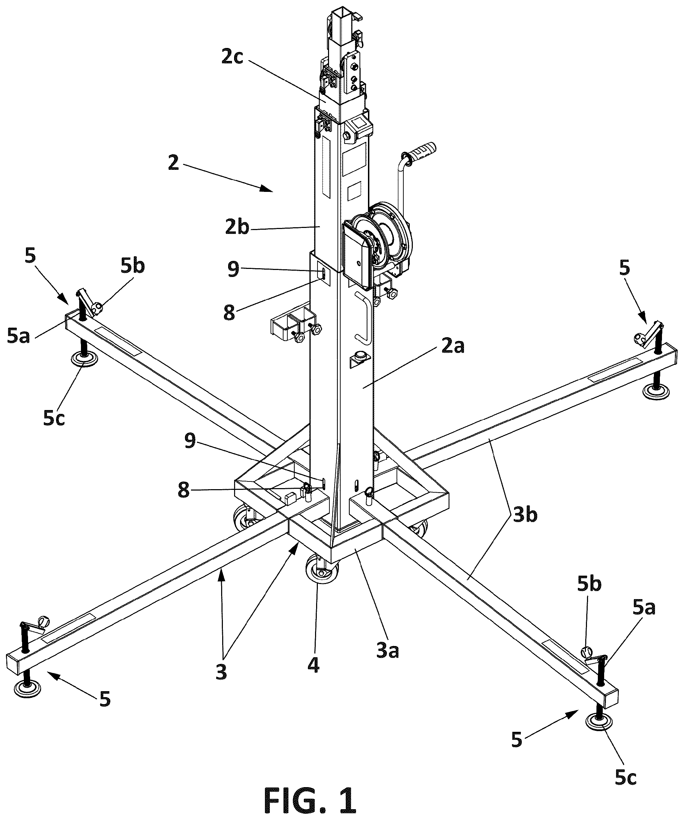

**Figure 1** shows a perspective view of a lifting tower including a system for measuring a load, object of the invention.
**Figure 2** shows a sectional view of the system for measuring the load.
**Figure 3** shows a front view of a part of the system for measuring.
**Figure 4** shows a view of a part of the system for measuring the load.

### Description of an exemplary embodiment of the invention

Considering the numbering adopted in the figures, the lifting tower 2 includes a system 1 for measuring a load; wherein said system 1 for measuring is located in one part of the lifting tower 2.

The tower 2 is designed to be able to lift different lighting and sound elements while keeping them stably in a lifted position; wherein said tower 2 comprises a vertical telescopic structure formed by a static first section 2a, located at the lower part of the tower 2, and a movable second section 2b guided within the first section 2a. In the embodiment shown in the figures, the tower 2 further comprises a movable third section 2c guided within the second section 2b.

The tower 2 further includes a support base 3 with wheels 4 which is attached to the first section 2a of said tower 2; wherein said wheels 4 are configured to be able to move the assembly of the lifting tower 2.

The support base 3 comprises a frame 3a to which the wheels 4 are coupled, and horizontal extensions 3b attached to said frame 3a and to the first section 2a of the tower 2, such that the support base 3 further includes height-adjustable extendable legs 5 that are supported on the ground to be able to stabilise and level the assembly of the lifting tower 2; wherein said extendable legs 5 are coupled by means of threading to some ends of the extensions 3b of the support base 3.

In the embodiment shown in the figures, each of the extendable legs 5 comprises a threaded rod 5a to the upper end of which there is attached a crank handle 5b, while at its lower end the threaded rod 5a is connected, using an articulated connection, to a base 5c which is an element forming part the extendable leg 5 that is supported on the ground, such that due to said base 5c, the extendable leg 5 can be suitably oriented for a stable support due to said sphere-shaped articulated connection.

The second section 2b guided within the first section 2a of the tower 2 rests on a damping element, such as a spring 6, for example, which is supported on a fixed base 7 integral with the first section 2a of the tower 2, such that when the tower 2 is loaded with a weight, the second section 2b descends downwards against the resistance of the spring 6, compressing it to a greater or lesser extent depending on the weight of the load.

Said movement is controlled by direct visualisation using the mechanical system 1 for measuring comprising the spring 6 as well as control elements 8, such as screws, for example, which are in principle fixed on the side faces of the second section 2b of the tower 2.

Said control elements 8 emerge outwards through vertical slots 9 that go through side walls forming the first section 2a of the tower 2, such that at least on the exterior surface of at least one of said side walls of the first section 2a there is a scale 10 adjacent to the corresponding vertical slot 9 to be able to control, see and measure the downward movement of the second section 2b of the tower 2 when it is loaded with the weight of the load elements to be supported, such as lighting elements and/or loudspeakers, for example, thereby controlling the maximum load that the tower 2 can support before it is lifted with the elements to be supported.

In order to maintain and ensure the stability and positioning of the spring 6, as well as to avoid its buckling, in a first embodiment, said spring 6 is coupled internally around a vertical rod 11 integral with the fixed base 7 of the first section 2a of the tower 2, whereas in a second embodiment of the invention, the spring 6 is coupled within a vertical bushing 12 integral with a plate 14 which is attached to the second section 2b of the tower 2, although said bushing 12 could also be attached to the fixed base 7 of the first section 2a of the tower 2.

Thus, a lower end of the tubular second section 2b of the tower 2 is closed by means of the plate 14, such that the spring 6 is supported at a lower end on the fixed base 7 of the first section 2a of the tower 2, while an upper end of the spring 6, opposite the upper end, is supported on the plate 14 of the second section 2b of the tower 2.

Thus, with this disclosed arrangement of the invention, if the weight of the load exceeds a value set or tared by the spring 6 used in each case and defined proportionally by the resistance of said spring 6, the latter is progressively compressed by a distance that will be visualised on the scale 10, intuitively showing by means of this load metre when the loaded weight is dangerous for the structure of the tower 2, by exceeding the values set in dependence of its design. It should be noted that the system 1 for measuring used described to know the weight of the load is a very simple and straightforward mechanical solution.

When weight is placed on the tower 2, the movable assembly formed by at least the second section 2b of the tower 2 drops in relation to the fixed part, which is the first section 2a of the tower 2, such that the measurement is taken according to the relative distance travelled of the control element 8 with respect to the scale 10 adjacent to the vertical slot 9.

Moreover, the fixed base 7, which closes the first tubular section 2a of the tower 2 in the lower portion, is fixed to the first tubular section 2a using screws 13.

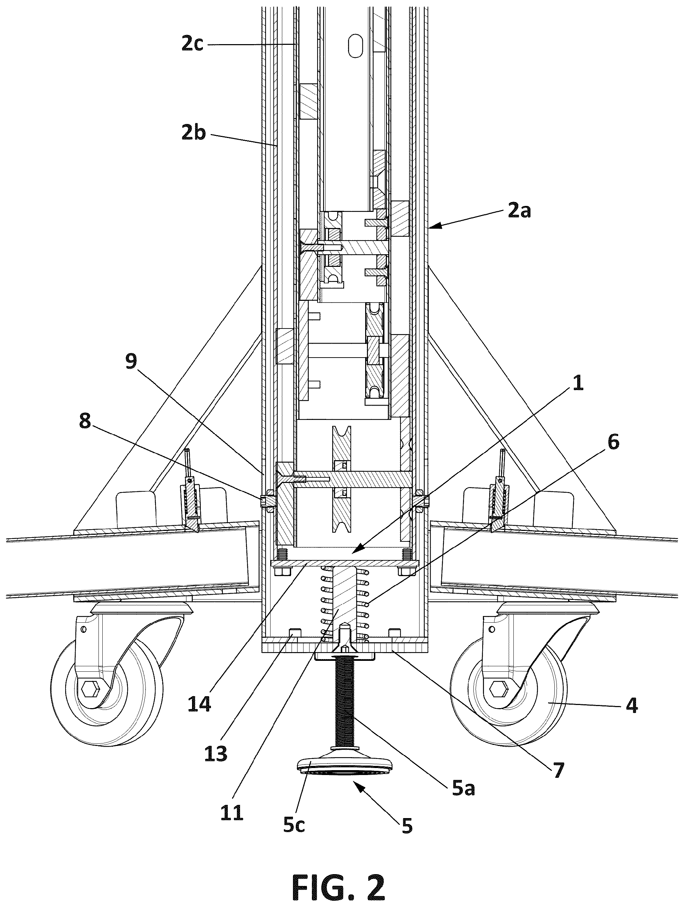

In a first embodiment of the invention, as shown in Figure 2, the maximum downward movement of the second section 2b of the tower 2 against the resistance of the spring 6, is limited by the rod 11 against which the plate 14 integral with the second section 2b of the tower 2 abuts.

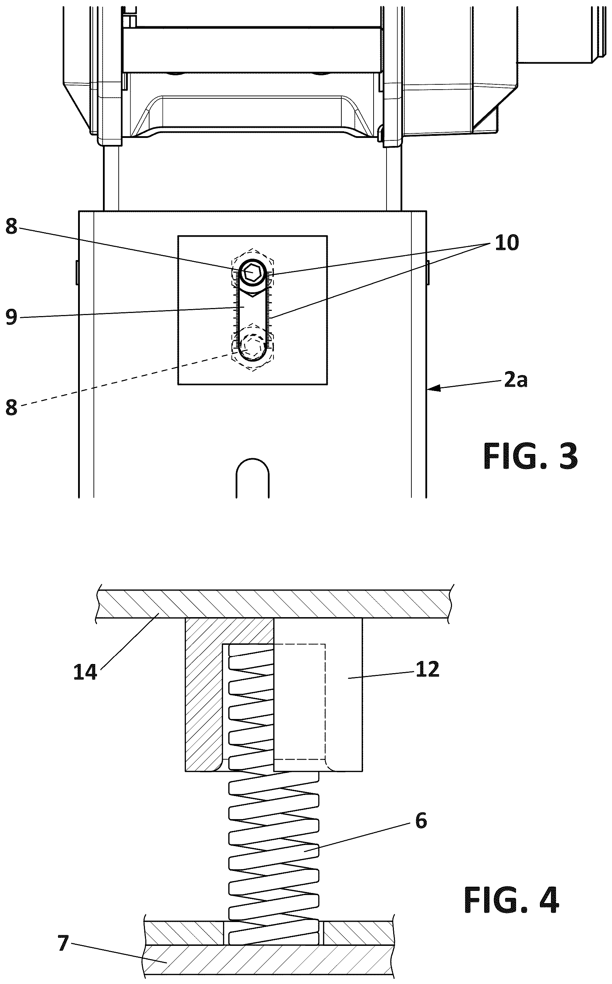

In contrast, in a second embodiment of the invention, as shown in Figure 4, the maximum downward movement of the second section 2b of the tower 2 against the resistance of the spring 6, is limited said maximum movement by the bushing 12 integral with the plate 14 of the second section 2b, which abuts against a laminar element supported on the fixed base 7 integral with the first section 2a of the tower 2.

The distance between the fixed base 7 of the first section 2a and the plate 14 of the second section 2b is calibrated so that the spring 6 is compressed at its maximum compression to the length that would be compressed with the calculated maximum weight of the part (second section 2b) of the tower 2 that is movable.

In this way, the measurement is tared and starts to move downwards when the first kilograms of load are placed, such that when the tower 2 has no load, the control element 8 is aligned with the zero mark on the scale 10 and when, for example, 200 kg are loaded, the control element 8 is aligned with the number 200 on the scale 10.

## Claims

1. A system for measuring a load in a lifting tower, wherein the tower (2) comprises a vertical telescopic structure formed by at least a first section (2a) and a movable second section (2b) guided within the first section (2a); **characterised in that** it comprises:
- a spring (6) working under compression, on which the second section (2b) of the tower (2) rests; wherein a first end of the spring (6) is supported on a fixed base (7) integral with the first section (2a) of the tower (2), while a second end of said spring (6), opposite the first end, is supported on a plate (14) integral with the second section (2b) of the tower (2);
- at least one control element (8) integral with the second section (2b) of the tower (2);
- a graduated scale (10) located on the exterior surface of the first section (2a) of the tower (2);
wherein during loading of the tower (2) with a weight, the second section (2b) of the tower (2) moves downwards against the resistance of the spring (6), the control element (8) moving in parallel from an initial position to a final position, both positions being controlled using the graduated scale (10).

2. **The system for measuring a load in a lifting tower** according to claim 1, **characterised in that** the spring (6) is coupled in the lower portion to a vertical stability element.

3. **The system for measuring a load in a lifting tower** according to claim 2, **characterised in that** the stability element comprises a rod (11) housed within said spring (6); wherein said rod (11) is integral with the fixed base (7) of the first section (2a) of the tower (2).

4. **The system for measuring a load in a lifting tower** according to claim 2, **characterised in that** the stability element comprises a bushing (12) in which a portion of said spring (6) is housed; wherein said bushing (12) is fixed to the plate (14) of the second section (2b) of the tower (2).

5. **The system for measuring a load in a lifting tower** according to any one of the preceding claims, **characterised in that** the maximum downward movement of the second section (2b) of the tower (2) against the resistance of the spring (6) is limited by the stability element (11, 12).

6. **The system for measuring a load in a lifting tower,** according to any one of the preceding claims, **characterised in that** the control element (8) emerges outwards through a vertical slot (9) that goes through a side wall of the tubular structure of the first section (2a) of the tower (2); wherein the graduated scale (10) is located in an area adjacent to the vertical slot (9) and arranged parallel to said vertical slot (9).

7. **A lifting tower,** which, comprising the system (1) for measuring a load described in any one of the preceding claims, is **characterised in that** it includes a support base (3) with wheels (4) which is attached to the first section (2a); wherein said wheels (4) are configured to be able to move the assembly of the lifting tower (2).

8. **The lifting tower** according to claim 7, **characterised in that** the support base (3) comprises a frame (3a) to which the wheels (4) are coupled, and horizontal extensions (3b) attached to said frame (3a) and to the first section (2a) of the tower (2); wherein the support base (3) further includes height-adjustable extendable legs (5) that are supported on the ground, which are configured to stabilise and level the assembly of the lifting tower (2); wherein said extendable legs (5) are coupled by means of threading to some ends of the extensions (3b) of the support base (3).
